# EUROPÄISCHE PATENTSCHRIFT

(11) **EP 0 779 515 B1**
(45) Veröffentlichungstag und Bekanntmachung des Hinweises auf die Patenterteilung: **23.10.2002**
(21) Anmeldenummer: 96119216.8
(22) Anmeldetag: 29.11.1996
(51) Int. Cl.: G01P 1/04

(54) **Drehzahl- und/oder Drehrichtungs-Sensorvorrichtung**
Sensing device for rotation rate and/or direction
Dispositif pour détecter la vitesse et/ou la direction de rotation

(30) Priorität: 13.12.1995 DE 19546595
(43) Veröffentlichungstag der Anmeldung: 18.06.1997
(73) Patentinhaber: SIEMENS AKTIENGESELLSCHAFT, 80333 München (DE)
(72) Erfinder: Benkert, Matthias, Dipl.-Ing., 97074 Würzburg (DE); Ziegler, Thomas, 97450 Arnstein (DE)

(56) Entgegenhaltungen:
- DE-A- 3 732 958
- DE-C- 3 805 702
- US-A- 4 960 333

## Beschreibung

Die Erfindung bezieht sich auf eine Drehzahl- und/oder Drehrichtung-Sensorvorrichtung gemäß Patentanspruch 1.

Durch die EP-B1-0 601 228 ist ein elektromotorischer Antrieb mit einer Drehzahl- und/oder Drehrichtung-Sensorvorrichtung bekannt, bei der zur Vermeidung einer Beschädigung des Polrades durch eine zu starke Preßsitzbelastung auf der Rotorwelle das Polrad lediglich im Schiebesitz auf die Rotorwelle aufgesteckt wird und zur Drehmitnahme mit der Rotorwelle in formschlüssige axiale und tangentiale Anlageverbindung mit einem gesonderten Halteteil gestellt ist, das seinerseits im Preßsitz auf die Rotorwelle aufgedrückt ist.

Der Erfindung liegt die Aufgabe zugrunde, mit gegenüber bisher bekannten Lösungen weiter reduziertem Fertigungs- und Montageaufwand den Drehzahl- bzw. Drehrichtungsgeber ohne übermäßige Druckbelastung auf der Rotorwelle sicher fixieren zu können.

Die Lösung dieser Aufgabe gelingt durch die Lehre des Patentanspruchs 1 bzw. des Patentanspruchs 2; vorteilhafte Ausgestaltungen der Erfindung sind jeweils Gegenstand der abhängigen Ansprüche.

Die erfindungsgemäße Drehzahl- und/oder Drehrichtung-Sensorvorrichtung erlaubt bei einem besonders einfachen Zwischenhalterungsteil dessen Vormontage auf der Rotorwelle bzw. an dem Drehzahl- bzw. Drehrichtungsgeber und das anschließende gegenseitige Fixieren von Drehzahl- bzw. Drehrichtungsgeber einerseits und Rotorwelle andererseits in ihrer Betriebsposition mit nur geringen Aufzieh- bzw. Aufdrückkräften und ohne übermäßige radiale Druckbelastung des Drehzahl- bzw. Drehrichtungsgebers bzw. Beschädigung der Oberfläche der Rotorwelle.

Durch die US 4 960 333 A bzw. die korrespondierende DE 690 19 458 T2 ist die Halterung eines Codierers auf einer Welle über einen elastischen O-Ring bekannt, um dadurch Abmessungstoleranzen des Codierers auszugleichen und dessen Axialspiel zu begrenzen.

Die Erfindung sowie weitere vorteilhafte Ausgestaltungen der Erfindung werden im folgenden anhand schematischer Ausführungsbeispiele in der Zeichnung näher erläutert; darin zeigen:
- FIG 1: in einem axialen Teil-Schnittbild einen Kommutatormotor eines Kraftfahrzeug-Getriebeverstellantriebes mit in bekannter Weise direkt auf einer Rotorwelle befestigtem Magnetkörper in Form eines Polrades als Drehzahl- bzw. Drehrichtungsgeber mit zugeordneten statorseitigen Hall-Sonden;
- FIG 2-5: ausgehend von einem vergrößerten Teilausschnitt aus FIG 1 vier verschiedene Varianten einer erfindungsgemäßen Halterung des Polrades auf der Rotorwelle jeweils in Vormontage-Stellung gemäß FIG 2,3 bzw. Betriebsstellung gemäß FIG 4,5.

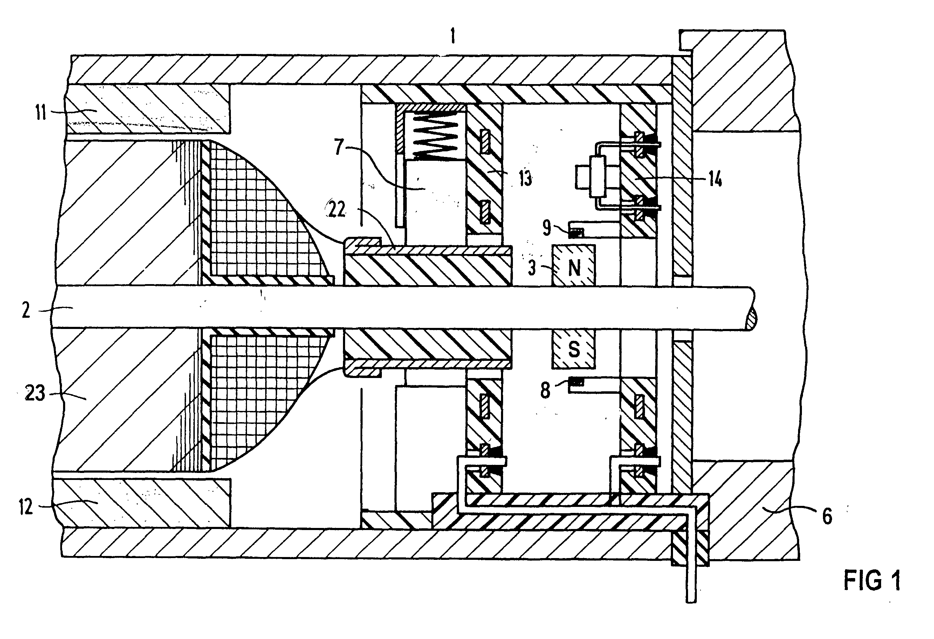

FIG 1 zeigt in einem axialen Teil-Schnittbild einen Kommutatormotor eines Kraftfahrzeug-Getriebeverstellantriebes mit einem Motorgehäuse 1 und einem an dieses axial anschließenden Getriebegehäuse 6, in das die Rotorwelle 2 als verlängerte Getriebewelle, z.B. Schneckenwelle, hineinragt. An der Innenumfangsfläche des Motorgehäuses 1 sind zur Erregung vorgesehenen Dauermagnete 11,12 und auf der Rotorwelle 2 ein mit einer Rotorwicklung bewickeltes Rotorpaket 23 sowie ein axial vorgelagerter, an die Rotorwicklung angeschlossener Kommutator 22 befestigt. Die Lamellen des Kommutators 22 werden zur Stromeinspeisung von Kohlebürsten 7 beschliffen, die an einer Bürstentragplatte 13 gehalten werden.

Zur Drehzahl- bzw. Drehrichtungserfassung ist unmittelbar auf der Rotorwelle 2, z.B. durch Aufdrücken und/oder Aufkleben, ein Polrad 3 in hier angedeuteter zweipoliger Ausführung N,S befestigt, dem auf einer statorseitigen Leiterplatte 14 Hall-Sonden 8,9 zugeordnet sind.

In dem bekannten vorgenannten Fall hat sich gezeigt, daß eine Klebeverbindung zwischen dem Polrad 3 und der Rotorwelle 2 nicht in allen Fällen, insbesondere bei rauhem Betriebseinsatz und längeren Betriebszeiten, einen sicheren Festsitz auf der Rotorwelle gewährleisten kann; da sich ein solchen Belastungen besser wiederstehender Preßsitz des Polrades 3 aufgrund dessen Sprödigkeit, insbesondere bei Herstellung als Sinter-Bauteil, verbietet, wurde im bekannten Fall der eigentliche Magnetkörper in Form des Polrades 3 preßsitzfrei lediglich im Schiebesitz auf die Rotorwelle aufgeschoben und die Fixierung des Polrades 3 in seiner Betriebsendstellung durch einen axial vor- und/oder nachgelagerten Halteteil übernommen, der seinerseits im Preßsitz und somit mit relativ hohem Druckaufwand auf die Rotorwelle aufgeschoben werden und konstruktiv derart gestaltet sein mußte, daß er eine sichere mechanische Fixierung und Drehmitnahme mit dem Polrad 3 gewährleisten konnte.

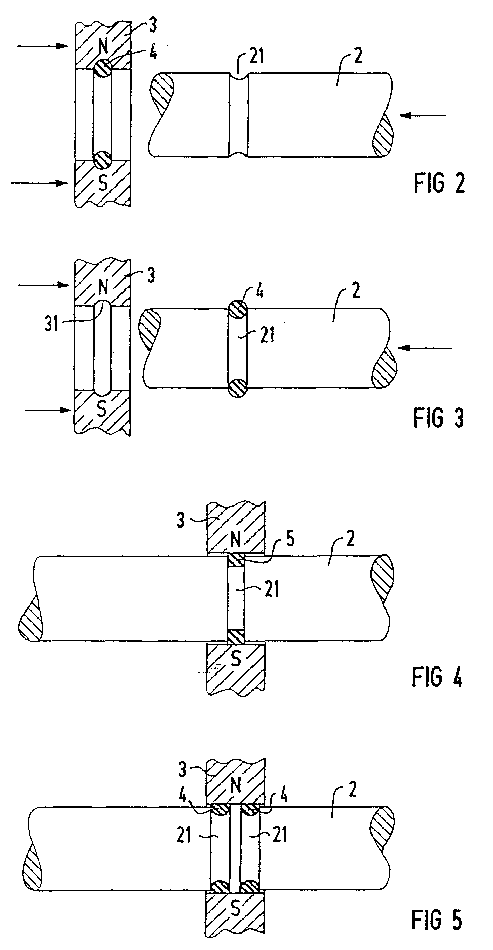

Erfindungsgemäß ist - wie anhand von FIG 2-5 im folgenden erläutert - zur gegenseitigen Halterung und Fixierung zwischen dem Polrad 3 einerseits und der Rotorwelle 2 andererseits ein gesondertes radial federndes bzw. elastisches Zwischenhalterungsteil, insbesondere in Form eines O-Ringes 4 bzw. eines Quad-Ringes 5 derart vorgesehen, daß der Drehzahl- bzw. Drehrichtungsgeber, in Form eines Polrades 3 mit einer Polarisierung N,S, preßsitzfrei, zweckmäßigerweise im Schiebesitz, über die Rotorwelle 2 bis zum Erreichen seiner Betriebsendposition leicht aufschiebbar und dann unter radialem Druck federnd bzw. elastisch auf den Außenumfang des elastischen Zwischenhalterungsteils aufdrückbar ist.

Es ist vorgesehen, das radial federnde bzw. elastische Zwischenhalterungsteil entweder an der Rotorwelle 2 oder an dem Polrad (3) vor deren gegenseitiger Montage im Sinne einer Vormontageeinheit an- bzw. einzubringen. Zur erleichterten Vormontage- und/oder Fixierungshilfe ist nach einer weiteren Ausgestaltung der Erfindung in das Polrad 3 eine Ringnut 31 und über den Umfang der Rotorwelle 2 in diese eine Ringnut 21 eingearbeitet, in die der jeweilige O-Ring 4 bzw. Quad-Ring 5 um eine geringe radiale Tiefe im wesentlichen formschlüssig eindringt.

FIG 2 zeigt die Vormontage eines O-Ringes 4, der im Sinne einer Vormontageeinheit in eine umlaufende Ringnut 31 des Polrades 3 um eine gewisse radiale Tiefe eingedrückt ist und in seiner Betriebsposition zusätzlich mit seiner radial inneren Kontur in eine korrespondierende Ringnut 21 der Rotorwelle 2 einschnappt. In ähnlicher Weise zeigt FIG 3 eine Vormontageeinheit zwischen einem O-Ring 4 und der Rotorwelle 2, wobei der O-Ring 4 im Sinne einer Vormontageeinheit auf die Rotorwelle 2 aufgespannt ist und dabei mit seiner radial inneren Kontur in eine korrespondierende Kontur einer Ringnut 21 der Rotorwelle 2 um eine gewisse radiale Tiefe einschnappt. In seiner Betriebsposition ragt der O-Ring 4 zusätzlich mit einer radial äußeren Kontur in eine korrespondierende Kontur einer in der Wellenöffnung des Polrades 3 verlaufenden korrespondierenden Ringnut 31. In jedem Fall sind die Anlageflächen zwischen dem Polrad 3 einerseits und der Rotorwelle 2 andererseits bzw. dem dazwischenliegenden Zwischenhalterungsteil derart bemaßt, daß in der Betriebsendposition aufgrund der Elastizität des Zwischenhalterungsteils ein hinreichender Druck zwischen dem Polrad 3 und der Rotorwelle 2 verbleibt, um eine sichere Lagefixierung zu gewährleisten.

FIG 4 zeigt die Halterung und Fixierung eines Polrades 3 auf einer Rotorwelle 2 unter Verwendung eines Quad-Ringes 5 als Zwischenhalterungsteil und einer Fixierungshilfe mit nur einer, in der Rotorwelle 2 vorgesehenen, Ringnut 21.

FIG 5 zeigt eine weitere Ausgestaltung der Erfindung dahingehend, daß je Drehzahl- bzw. Drehrichtungsgeber in Form eines auch hier angenommenen zweipoligen Polrades 3 zwei axial hintereinander angeordnete Zwischenhalterungsteile in Form zweier O-Ringe 4;4 vorgesehen sind; in diesem Fall weist nur die Rotorwelle 2 eine Ringnut 21 auf, so daß sich das zusammmengedrückte Zwischenhalterungsteil an der zugewandten radial äußeren Fläche des Polrades 3 als entsprechende ebene Fläche darstellt. In gleicher Weise kann auch bei den zuvor beschriebenen Ausführungsbeispielen auf jeweils nur eine Ringnut je Zwischenhalterungsteil in der Rotorwelle zurückgegriffen werden.

## Patentansprüche

1. Drehzahl- und/oder Drehrichtung-Sensorvorrichtung
- mit auf einer Rotorwelle (2) über einen elastischen Ring (4 bzw.5) in seiner Betriebsposition fixierbarem Polrad (3);
- mit im Sinne einer Vormontageeinheit auf der Rotorwelle (2) in der Betriebsposition vorfixierbarem elastischen Ring (4 bzw.5);
- mit einer Ringnut (21) in der Rotorwelle (2) zur Vorfixierung des elastischen Ringes (4 bzw.5) in seiner Betriebsposition durch ein teilweises Eintauchen des Ringes (4 bzw.5) in die Ringnut (21).

2. Drehzahl- und/oder Drehrichtung-Sensorvorrichtung
- mit auf einer Rotorwelle (2) über einen elastischen Ring (4 bzw.5) in seiner Betriebsposition fixierbarem Polrad (3);
- mit im Sinne einer Vormontageeinheit an dem Polrad (3) in der Betriebsposition vorfixierbarem elastischen Ring (4 bzw.5);
- mit einer Ringnut (31) in dem Polrad (3) zur Vorfixierung des elastischen Ringes (4 bzw.5) in seiner Betriebsposition durch teilweises Eintauchen des Ringes (4 bzw.5) in die Ringnut (31);
- mit einer Ringnut (21) in der Rotorwelle (2), in welche der in dem Polrad (3) vorfixierte Ring (4 bzw.5) in gegenseitiger Betriebsposition der Rotorwelle (2) einerseits und des Polrades (3) andererseits zumindest teilweise eintaucht.

3. Drehzahl- und/oder Drehrichtung-Sensorvorrichtung nach Anspruch 1
- mit einer Ringnut (31) in dem Polrad (3), in welche der auf der Rotorwelle (2) vorfixierte Ring (4 bzw.5) in gegenseitiger Betriebsposition der Rotorwelle (2) einerseits und des Polrades (3) andererseits zumindest teilweise eintaucht.

4. Drehzahl- und/oder Drehrichtung-Sensorvorrichtung nach zumindest einem der vorhergehenden Ansprüche
- mit einem elastischen Ring in Form zumindest eines gesonderten O-Ringes (4), insbesondere aus Gummi.

5. Drehzahl- und/oder Drehrichtung-Sensorvorrichtung nach zumindest einem der vorhergehenden Ansprüche
- mit einem elastischen Ring in Form eines gesonderten Quad-Ringes (5), insbesondere aus Gummi.

6. Drehzahl- und/oder Drehrichtung-Sensorvorrichtung nach zumindest einem der vorhergehenden Ansprüche
- mit einem Polrad (3) aus einem polarisierten Sintermagnetring oder einem polarisierten kunststoffgebundenen Ferritmagnetring.

7. Drehzahl- und/oder Drehrichtung-Sensorvorrichtung nach zumindest einem der vorhergehenden Ansprüche
- mit je Polrad mehreren, axial hintereinander angeordneten elastischen Ringen (4 bzw.5).

8. Drehzahl- und/oder Drehrichtung-Sensorvorrichtung nach zumindest einem der vorhergehenden Ansprüche
- mit jeweils preßsitzfrei im Schiebesitz zwischen der Außen-Umfangsfläche der Rotorwelle (2) und der Innenumfangsfläche der Wellenöffnung des Polrades (3) bis zum Klemmsitz unter Vermittlung des elastischen Ringes (4 bzw.5) aufschiebbarem Polrad (3).

9. Drehzahl- und/oder Drehrichtung-Sensorvorrichtung, insbesondere für einen Fensterheber- bzw. Schiebedachantrieb eines Kraftfahrzeuges, nach zumindest einem der vorhergehenden Ansprüche
- mit auf der Rotor- bzw. Getriebewelle (2) eines Getriebe-Verstellantriebes (1;6) gehaltertem Polrad (3);
- mit zumindest einem dem Polrad (3) zugeordneten statorseitigen, insbesondere an einer Leiterplatte (14) bzw. an der Bürstenplatte (13) eines Kommutatormotors gehalterten, Impulsempfänger, insbesondere in Form zumindest einer Hall-Sonde (8 bzw.9).

## Claims

1. Rotational-speed and/or direction-of-rotation sensor device
- having a rotor (3) which can be secured in its operating position on a rotor shaft (2) by means of an elastic ring (4 or 5);
- having an elastic ring (4 or 5) which can be secured in advance in the operating position on the rotor shaft (2) in the manner of a premounted unit;
- having an annular groove (21) in the rotor shaft (2) for securing the elastic ring (4 or 5) in advance in its operating position by partially dipping the ring (4 or 5) into the annular groove (21).

2. Rotational-speed and/or direction-of-rotation sensor device
- having a rotor (3) which can be secured in its operating position on a rotor shaft (2) by means of an elastic ring (4 or 5);
- having an elastic ring (4 or 5) which can be secured in advance in the operating position on the rotor (3) in the manner of a premounted unit;
- having an annular groove (31) in the rotor (3) for securing the elastic ring (4 or 5) in advance in its operating position by partially dipping the ring (4 or 5) into the annular groove (31);
- having an annular groove (21) in the rotor shaft (2) into which the ring (4 or 5) which is secured in advance in the rotor (3) dips at least partially in the mutual operating position of the rotor shaft (2) on the one hand and of the rotor (3) on the other.

3. Rotational-speed and/or direction-of-rotation sensor device according to Claim 1,
- having an annular groove (31) in the rotor (3) into which the ring (4 or 5) which is secured in advance on the rotor shaft (2) dips at least partially in the mutual operating position of the rotor shaft (2) on the one hand and of the rotor (3) on the other.

4. Rotational-speed and/or direction-of-rotation sensor device according to at least one of the preceding claims,
- having an elastic ring in the form of at least one separate O-ring (4), in particular made of rubber.

5. Rotational-speed and/or direction-of-rotation sensor device according to at least one of the preceding claims,
- having an elastic ring in the form of a separate quad ring (5), in particular made of rubber.

6. Rotational-speed and/or direction-of-rotation sensor device according to at least one of the preceding claims,
- having a rotor (3) made of a polarized sintered magnetic ring or a polarized plastic-bound ferrite magnetic ring.

7. Rotational-speed and/or direction-of-rotation sensor device according to at least one of the preceding claims,
- having a plurality of elastic rings (4 or 5), arranged axially one behind the other, per rotor.

8. Rotational-speed and/or direction-of-rotation sensor device according to at least one of the preceding claims,
- having a rotor (3) which can be pushed on, in each case without a form fit and with a sliding fit between the outer circumferential surface of the rotor shaft (2) and the inner circumferential surface of the shaft orifice of the rotor (3) until a clamping fit is brought about using the elastic ring (4 or 5).

9. Rotational-speed and/or direction-of-rotation sensor device, in particular for a window lifter or sunroof drive of a motor vehicle, according to at least one of the preceding claims,
- having a rotor (3) secured on the rotor shaft or transmission shaft (2) of a gear-mechanism adjustment drive (1; 6);
- having at least one stator-side pulse receiver, in particular in the form of at least one Hall probe (8 or 9), which is assigned to the rotor (3), in particular secured on a printed circuit board (14) or on the brush plate (13) of a commutator motor.

## Revendications

1. Dispositif pour détecter la vitesse et/ou le sens de rotation,
- comportant une roue (3) polaire pouvant être immobilisée dans sa position de service sur un arbre (2) de rotor au moyen d'un anneau (4 ou 5) élastique ;
- comportant un anneau (4 ou 5) élastique pouvant être pré-immobilisé dans la position de service sur l'arbre (2) de rotor, au sens d'une unité pré-assemblée,
- comportant une rainure (21) annulaire dans l'arbre (2) de rotor pour la pré-immobilisation de l'anneau (4 ou 5) élastique dans sa position de service par une pénétration partielle de l'anneau (4 ou 5) dans la rainure (21) annulaire.

2. Dispositif pour détecter la vitesse et/ou le sens de rotation
- comportant une roue (3) polaire pouvant être immobilisée dans sa position de service sur un arbre (2) de rotor au moyen d'un anneau (4 ou 5) élastique ;
- comportant un anneau (4 ou 5) élastique pouvant être pré-immobilisé dans la position de service sur la roue (3) polaire, au sens d'une unité pré-assemblée,
- comportant une rainure (31) annulaire dans la roue (3) polaire pour la pré-immobilisation de l'anneau (4 ou 5) élastique dans sa position de service par pénétration partielle de l'anneau (4 ou 5) dans la rainure (31) annulaire.
- comportant une rainure (21) annulaire dans l'arbre (2) de rotor, dans laquelle pénètre au moins partiellement l'anneau (4 ou 5) pré-immobilisé dans la roue (3) polaire en la position de service réciproque de l'arbre (2) de rotor d'une part et de la roue (3) polaire d'autre part.

3. Dispositif pour détecter la vitesse et/ou le sens de rotation suivant la revendication 1
- comportant une rainure (31) annulaire dans la roue (3) polaire, dans laquelle pénètre au moins partiellement l'anneau (4 ou 5) pré-immobilisé sur l'arbre (2) de rotor en la position de service réciproque de l'arbre (2) de rotor d'une part et de la roue (3) polaire d'autre part.

4. Dispositif pour détecter la vitesse et/ou le sens de rotation suivant au moins l'une des revendications précédentes
- comportant un anneau élastique sous la forme d'au moins un anneau (4) torique séparé, notamment en caoutchouc.

5. Dispositif pour détecter la vitesse et/ou le sens de rotation suivant au moins l'une des revendications précédentes
- comportant un anneau élastique sous la forme d'un anneau (5) séparé à section carrée, notamment en caoutchouc.

6. Dispositif pour détecter la vitesse et/ou le sens de rotation suivant au moins l'une des revendications précédentes
- comportant une roue (3) polaire constituée d'une bague d'aimant polarisée en matériau fritté ou d'une bague d'aimant polarisée en ferrite combinée à du plastique.

7. Dispositif pour détecter la vitesse et/ou le sens de rotation suivant au moins l'une des revendications précédentes
- comportant, pour chaque roue polaire, plusieurs anneaux (4 ou 5) élastiques disposés en succession axiale.

8. Dispositif pour détecter la vitesse et/ou le sens de rotation suivant au moins l'une des revendications précédentes
- comportant une roue (3) polaire pouvant être respectivement enfilée sans ajustement pressé, en ajustement coulissant, entre la surface périphérique extérieure de l'arbre (2) de rotor et la surface périphérique intérieure de l'ouverture d'arbre de la roue (3) polaire, jusqu'à l'obtention d'un ajustement serré au moyen de l'anneau (4 ou 5) élastique.

9. Dispositif pour détecter la vitesse et/ou le sens de rotation, notamment pour un entraînement de lève-vitre ou de toit ouvrant d'un véhicule automobile, suivant au moins l'une des revendications précédentes
- comportant une roue (3) polaire maintenue sur l'arbre (2) de rotor ou encore de transmission d'un mécanisme (1 ; 6) d'entraînement et de transmission ;
- comportant au moins un récepteur d'impulsions associé à la roue (3) polaire côté stator, notamment sous la forme d'au moins une sonde (8 ou 9) à effet Hall, notamment maintenu sur une carte (14) imprimée ou sur le porte-balais (13) d'un moteur à collecteur.
